# EUROPEAN PATENT APPLICATION

(11) **EP 2 756 984 A1**
(43) Date of publication of application: **23.07.2014**
(21) Application number: 12831638.7
(22) Date of filing: 12.09.2012
(51) Int. Cl.: B60N 2/28

(54) **MOTOR-VEHICLE CHILD SAFETY SEAT**

(30) Priority: 14.09.2011 ES 201131488 P
(71) Applicant: Play, S.A., 08184 Palau-solita I Plegamans, Barcelona (ES)
(72) Inventor: JANE STOPP, Joaquin, E-08184 Palau-solita I Plegamans, Barcelona (ES)
(74) Representative: Carpintero Lopez, Francisco
(86) International application number: PCT/ES2012/070651
(87) International publication number: WO 2013/038045

(57) **Abstract**

The motor-vehicle child safety seat comprises its own seatbelt (1) for securing a user to said child seat, said seatbelt (1) comprising a rear end affixed to said child seat, and it is characterized in that said rear end is affixed to a retractor (5) integral with the child seat.

This enables the seatbelt of the child seat to become suitably tightened automatically and also to lock in the event of excessive acceleration or unwinding.

## Description

The present invention relates to a motor-vehicle child safety seat, particularly to a child seat comprising a seatbelt of the seat itself.

### Background of the Invention

A child safety seat must be used today when a child travels in a motor vehicle.

There are different types of child safety seats, depending on the child's weight. Therefore, group 0 seats are used from birth up to 9 kilograms of weight; group 0+ seats are used from birth up to 13 kilograms of weight; group I seats are used from 9 kilograms of weight up to 18 kilograms of weight; and group II and III seats are used from 15 kilograms of weight up to 36 kilograms of weight.

Group 0, 0+ and I seats have their own seatbelt, independent of the seatbelt of the motor vehicle, whereas the seatbelt of the motor vehicle is used for securing the child in group II and III seats.

Furthermore, group 0, 0+ and I seats can use the seatbelt of the motor vehicle for being secured to the seat of the motor vehicle or the hook system known as Isofix.

To correctly use the seatbelt of the child seat, it must be properly tightened such that it performs its securing function but does not excessively squeeze the child's body.

Seatbelts in child seats include tensioners which must be operated manually to correctly tighten said seatbelts.

Since this tightening must not always be the same due to the volume of clothing, for example, or due to growth, proper tightness must be checked each time the child seat is used, which is not done in practice. In contrast, it has been found in practice that the seatbelt is usually not tightened, but rather stays in the position of the last usage.

Accordingly, it is obvious that there is a need for a mechanism that allows automatically tightening the seatbelt of the child seat.

### Description of the Invention

The child safety seat of the invention solves the mentioned drawbacks and has other advantages that will be described.

The motor-vehicle child safety seat comprises its own seatbelt for securing a user to said child seat, said seatbelt comprising a rear end affixed to said child seat, and characterized in that said rear end is affixed to a retractor integral with the child seat.

As a result of this feature, the seatbelt of the child seat is suitably tightened automatically, simply upon placing it on the user and affixing it by means of a buckle or the like, subsequent tightening not required.

According to two alternative embodiments, said retractor is a single-sensitive retractor or a multiple-sensitive retractor.

A retractor is a locking mechanism that is actuated in the event of an emergency due to (positive or negative) acceleration of the vehicle, an unwinding of the belt from the retractor or any other automatic means (single-sensitive), or a combination of several of these factors (multiple-sensitive).

According to a preferred embodiment, said seatbelt comprises an end strap and a pair of side straps attached by means of a linking element, the end opposite the linking element of the end strap being affixed to said retractor.

According to two alternative embodiments, said seatbelt of the child seat is a five-point seatbelt or a three-point seatbelt.

The three-point seatbelt includes two straps that go above the user's shoulders and one between the user's legs. The five-point seatbelt further includes two other straps above the user's hips.

Advantageously, said retractor is located in a rear lower position in said child seat.

### Brief Description of the Drawings

To better understand the foregoing description, drawings are attached in which a practical embodiment is schematically depicted only by way of non-limiting example.
Figure 1 is a rear elevational view of the child safety seat of the present invention; and
Figure 2 is a detail of the retractor of the seatbelt used in the child safety seat of the present invention.

### Description of a Preferred Embodiment

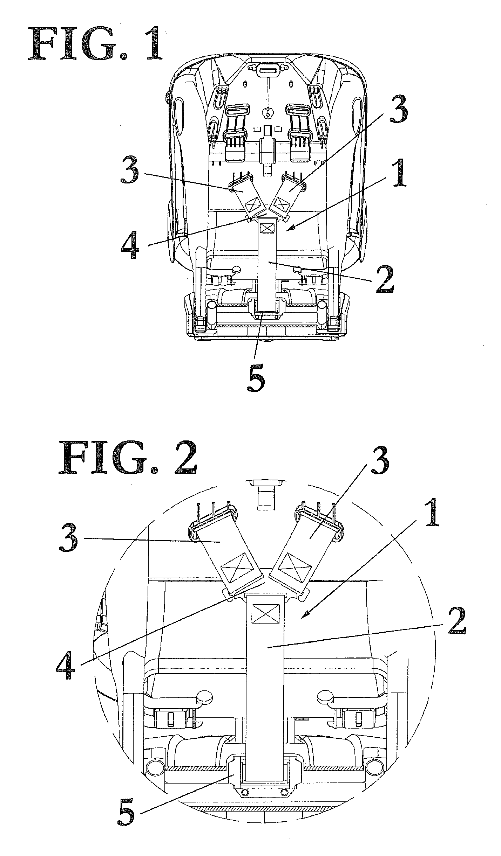

As can be seen in Figure 1, the motor-vehicle child safety seat of the present invention comprises a seatbelt of the child seat itself, indicated by means of reference number 1.

Said seatbelt 1 is formed by several straps, as seen in the figure. Particularly, in its rear part it comprises an end strap 2 and two side straps 3, which are attached by means of a linking element 4. It must be indicated that this arrangement of the straps in its rear part is conventional for three- or five-point seatbelts, as explained above.

According to the invention, said end strap 2 is attached to a retractor 5 at its end opposite the end affixed to the linking element 4. In other words, the rear end of said seatbelt 1 is affixed or attached to said retractor 5.

Said retractor 5 is affixed to or integral with the child seat, preferably being placed at a lower position, close to the base, in the rear part of the child seat.

This device allows using a single retractor 5 for the entire seatbelt.

Retractor must be understood herein to be a device for the complete or partial housing and locking of the strap of a child seat or retaining system. According to the locking system, a retractor can be:

An emergency locking retractor that does not limit the user's freedom of movement in normal driving conditions. It incorporates a length regulating device that automatically adjusts the strap against the user's body, and a locking mechanism that is actuated in the event of an emergency due to (positive or negative) acceleration of the vehicle, an unwinding of the strap from the retractor or any other automatic means (single-sensitive), or a combination of several of these factors (multiple-sensitive).

A retractor with emergency locking actuated by acceleration of the vehicle (vehicle-sensitive) must lock the strap if the acceleration or deceleration of the vehicle is equal to or greater than 0.45 g. On the other hand, a vehicle-sensitive retractor must not be locked when inclined less than 12° in any direction from the installation position indicated by the manufacturer, and it must be locked when inclined more than 27° in any direction from the installation position indicated by the manufacturer.

A retractor with locking due to unwinding or extraction of the strap (strap-sensitive) must not be locked when the strap extraction acceleration is less than 0.8 g and it must be locked when the strap extraction acceleration is equal to or greater than a specific value, the acceleration being measured in the strap extraction direction.

Therefore, a single retractor in the child seat of the present invention means that the seatbelt 1 is always adequately tightened and at the same time also suitably retains the child in the event that any of the situations indicated above occurs, increasing the degree of safety of the child seat of the present invention.

Despite having made reference to a specific embodiment of the invention, it is obvious for a person skilled in the art that the described child safety seat is susceptible to a number of variations and modifications and that all the mentioned details can be replaced with other technically equivalent details without departing from the scope of protection defined by the attached claims.

## Claims

1. Motor-vehicle child safety seat, comprising its own seatbelt (1) for securing a user to said child seat, said seatbelt (1) comprising a rear end affixed to said child seat, **characterized in that** said rear end is affixed to a retractor (5) integral with the child seat.

2. Motor-vehicle child safety seat according to claim 1, wherein said retractor (5) is a single-sensitive retractor.

3. Motor-vehicle child safety seat according to claim 1, wherein said retractor (5) is a multiple-sensitive retractor.

4. Motor-vehicle child safety seat according to claim 1, wherein said seatbelt (1) comprises an end strap (2) and a pair of side straps (3) attached by means of a linking element (4), the end opposite the linking element (4) of the end strap (2) being affixed to said retractor (5).

5. Motor-vehicle child safety seat according to claim 1, wherein said seatbelt (1) of the child seat is a five-point seatbelt.

6. Motor-vehicle child safety seat according to claim 1, wherein said seatbelt (1) of the child seat is a three-point seatbelt.

7. Motor-vehicle child safety seat according to the preceding claims, wherein said retractor (5) is located in a rear lower position in said child seat.
